# EUROPEAN PATENT APPLICATION

(11) **EP 1 764 681 A2**
(43) Date of publication of application: **21.03.2007**
(21) Application number: 06119785.1
(22) Date of filing: 30.08.2006
(51) Int. Cl.: G06F 3/12

(54) **Method, apparatus and computer program product for modifying attributes of a cancelled print job**

(30) Priority: 01.09.2005 EP 05291817
(71) Applicant: Océ-Technologies B.V., 5914 CA Venlo (NL)
(72) Inventor: Reuvers, Sebastianus A., 58032 AX, Venray (NL); Battistini, Patrick Y., 75011, Paris (FR); Le Pennec, Claude, 94140, Alfortville (FR)
(74) Representative: Janssen, Paulus J. P.

(57) **Abstract**

The invention relates to a method for executing a print process on a printing apparatus provided with a print engine, a local user interface unit and a control unit, comprising the steps of receiving a cancel instruction via the local user interface unit and cancelling an active print process of a print job executed according to image processing attributes. The method further comprises the steps of receiving an instruction via the local user interface unit modifying the image processing attributes of the print job, converting the print job according the modified image processing attributes into a raster image and activating a print process of the print job according to the modified image processing attributes. The invention also relates to a printing apparatus comprising a print engine, a local user interface and a control unit.

## Description

The invention relates to a method for executing a print process on a printing apparatus provided with a print engine, a local user interface unit and a control unit, comprising the steps of receiving a cancel instruction via the local user interface unit and cancelling an active print process of a print job executed according to image processing attributes.

The invention further relates to a printing apparatus comprising a print engine, a local user interface unit and a control unit for controlling a print process, said control unit being adapted to convert a print job having image processing attributes into a raster image, the control unit being further adapted to cancel an active print process of the print job having image processing attributes upon receipt of a cancel instruction inputted via the local user interface unit.

The invention also provides a computer program product residing on a computer readable medium comprising instructions for causing at least one process unit to perform the steps of the method of the invention.

Generally, printing apparatuses of the type set forth are provided with a 'cancel' button on a control panel of the print engine. A user simply presses the 'cancel' button to cancel the active print process of a submitted print job. In many cases, the user cancels an active print process of a submitted print job upon noticing, when the first printed areas become visible on the outputted print media, that the image processing attributes of the print job are wrong. The user has to walk back to his or her workstation from which the print job was submitted, modify the image processing attributes of the print job, submit the modified print job and walk again to the printing apparatus. This is a waste of time. Moreover, when a user wants to test the effect of different image processing attributes of the print job on the visual aspect of a printed image, the known method is very inefficient.

The object of the present invention is to improve a printing apparatus and method for executing a print process of the above type such that the waste of time is reduced when image processing attributes of a print job have to be modified.

The invention achieves this object for a method of the above type by carrying out the steps of receiving an instruction via the local user interface unit modifying the image processing attributes of the print job, converting the print job according the modified image processing attributes into a raster image and activating a print process of the print job according to the modified image processing attributes. The waste of time is significantly reduced. This is moreover very beneficial in the test situation described above, because the gain of efficiency is important.

The invention achieves this object for a printing apparatus of the above type with the control unit being further adapted to receive modified image processing attributes inputted via the local user interface and to convert the print job with the modified image processing attributes into a raster image, when the active print job has been cancelled via the local user interface unit.

It is thus possible for the user to modify a number of image processing attributes via the local interface and to have the print process executed with the modified attributes without the obligation to walk back to the workstation from which the print job was submitted.

Embodiments of the present invention are now explained with reference to the following drawings.
Fig. 1 is a schematic view showing a print system comprising a printing apparatus according to an embodiment of the invention.
Fig. 2 is a schematic diagram of a printing apparatus according to an embodiment of the invention.
Fig. 3 is a flow diagram showing a method according to an embodiment of the invention.
Figs. 4, 5 and 6 are representations of the display unit of a local user interface unit for use in a printing apparatus according to an embodiment of the invention.
Fig. 7 is a schematic diagram of printing apparatus according to another embodiment of the invention.

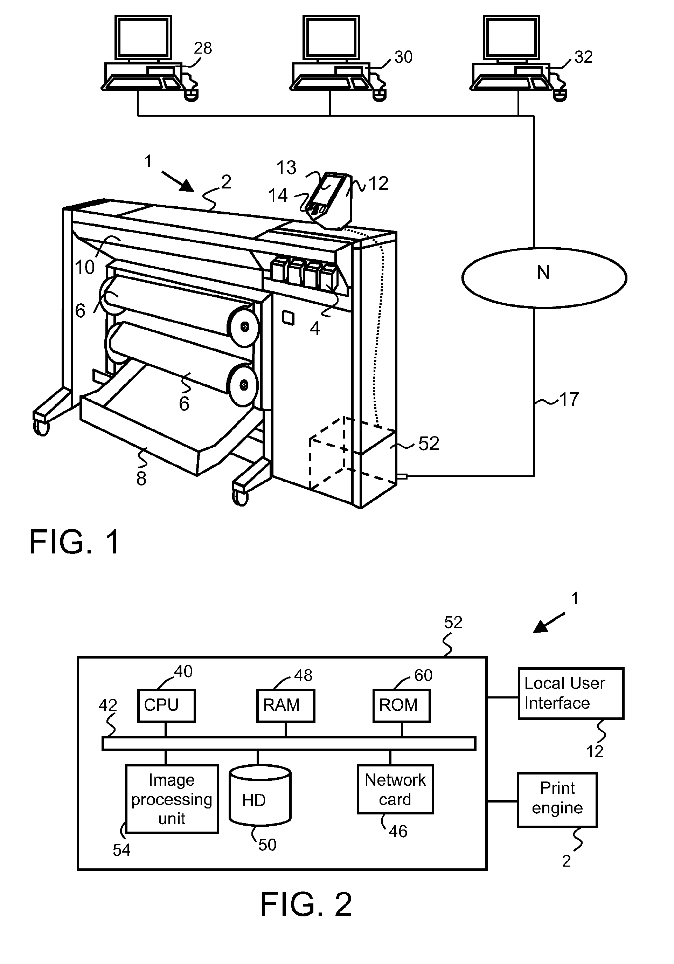

In Fig. 1, workstations 28, 30, 32 are examples of information processing apparatuses which are respectively connected to a printing apparatus 1 via a network N. The network N may be a local area network (LAN), the internet or the like. The connection is diagrammatically shown in the form of a cable 17, but nevertheless, the network N could be a wireless LAN. The printing apparatus 1 comprises a print engine 2 for printing images, a control unit 52 for controlling the print process and a local user interface unit 12. In one embodiment of the printing apparatus according to the invention, the local user interface unit 12 is integrated to the print engine 2 and the control unit 52 is placed inside the print engine 2. The control unit 52 ensures that images are printed on print media by the print engine 2 according to a print job submitted from any of the workstations 28, 30 or 32. A print job includes image data to be printed and print parameters such as image processing attributes and print settings.

The print engine 2 may use any number of printing techniques. It can be a thermal or piezoelectric inkjet printer, a pen plotter, or a press system based on organic photoconductor technology, for instance. In the example shown in Fig. 1, printing is achieved using a wide format inkjet printer provided with four different basic inks, such as cyan, magenta, yellow and black. The basic inks are stored in four ink containers 4 for supplying ink to the ink jet printhead. The images are printed on an ink receiving medium (print media) such as a sheet of paper supplied by any of the paper rolls 6. Printed sheets of papers are deposited in the delivery tray 8. The housing 10 contains the printhead (not shown) which is mounted on a carriage for printing swaths of images. The local user interface unit 12 is integrated to the print engine and comprises a display unit 13 and a control panel 14. The display unit 13 is adapted to display the status of a print job, the image processing attributes of the print job, the status of the printing apparatus etc. The control panel 14 includes mechanical hardware keys such as a ten-key pad, a start key and the like used to input user's instructions. The control panel 14 may include software keys such as touch pad keys on an operation window of a touch panel type displayed for example on the display unit 13.

The user interface unit 12 is connected to the control unit 52 placed inside the print engine 2 and is adapted to transmit instructions inputted by a user via the control panel to the control unit 52. The control unit 52 is adapted to issues commands to the print engine for controlling the print process, and to the local user interface 12 for displaying the adequate operation windows on the display unit 13.

When a user wants to print a digital document from any of the workstations 28, 30 or 32, for example an engineering drawing having the format HP-GL/2, he or she calls up a client application by clicking an icon intended for this purpose in the application window of his or her monitor. This client application enables the user to a create and submit a print job to a printing apparatus, the user thereby assigning image processing attributes and print settings to the print job. A print job includes image data to be printed and parameters such as image processing attributes and print settings discussed hereinafter. Image processing attributes and print settings are parameters used to control the printing apparatus in order to execute a print process of the print job according to the parameters. Once the print job is created, it is transferred through the network N to the control unit 52. For sending the file, an http network communication may be used.

As shown in Fig. 2, the control unit 52 of the printing apparatus 1 comprises a Central Processing Unit (CPU) 40, a Random Access Memory (RAM) 48, a Read Only Memory (ROM) 60, a network card 46, a hard disk (HD) 50 and an image processing unit 54 (such as a Raster Image Processor or RIP). The aforementioned units are interconnected through a bus system 42.

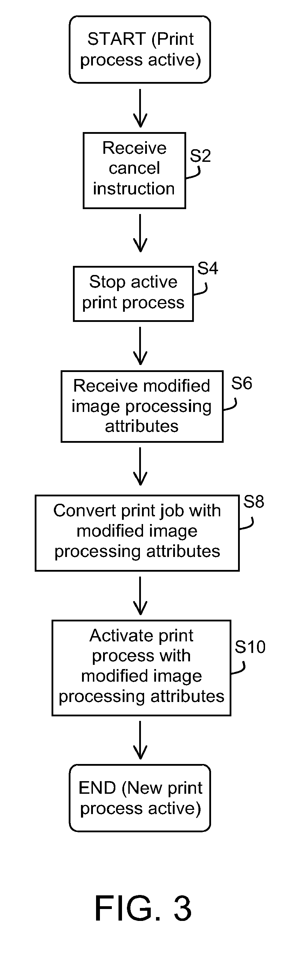

The CPU 40 controls the respective units of the control unit 52, the local user interface 12 and the print engine 2, in accordance with control programs stored on the ROM 60 or on the HD 50. The CPU 40 also control computer programs required to execute processes shown in the flowchart of Fig. 3 to be described later.

The ROM 60 stores programs and data such as boot program, set-up program, various set-up data or the like, which are to be read out and executed by the CPU 40.

The hard disk 50 is an example of a storage unit for storing and saving programs and data which make the CPU 40 execute a print process to be described later. The hard disk 50 also comprises an area for saving the data of externally submitted print jobs. The programs and data on the HD 50 are read out onto the RAM 48 by the CPU 40 as needed. The RAM 48 has an area for temporarily storing the programs and data read out from the ROM 60 and HD 50 by the CPU 40, and a work area which is used by the CPU 40 to execute various processes.

The network card 46 connects the control unit 52 to the network N and is designed to provide communication with the workstations 28, 30 and 32, and with other devices.

The image processing unit 54 may be implemented either as a software component of an operating system running on the control unit 52 or as a firmware program executed on the CPU 40. The image processing unit 54 has functions for reading, interpreting and rasterizing the print job data. Said print job data contains image data to be printed (i.e. fonts and graphics that describe the content of the document to be printed, described in a Page Description Language or the like), image processing attributes and print settings.

The interpretation function examines the print job data and identifies the command embedded in the data, such as printer control, page format, font management, text layout and graphics. The interpreter generates a code which is data of a format suitable for the rasterizing step. Rasterizing is the final stage in the process of preparing an image for printing, and consists in converting said code into an array of dots (i.e. a raster image) to be used by the print engine. Once the raster image file is ready, it is passed to the print engine.

Image processing attributes are parameters which are assigned to a print job and which have an influence on the raster image obtained upon rasterizing. An example of an image processing attribute is the print resolution assigned to the print job. Depending on the assigned resolution, the number of printed dots per inch differs. Another example of an image processing attribute is the colour mode which is assigned to the print job. If the chosen colour mode is monochrome, only dots corresponding to black ink (for example) are represented in the raster image. On the other hand, if the print job has been assigned a colour mode, the raster image contains a number of colour planes, each describing dots to be printed in a given colour (for examples, planes in Cyan, Magenta, Yellow and Black). Other examples of image processing attributes include colour correction, colour emulation, image enhancement (like edge sharpness or the like), type of halftoning method (error diffusion, masking or the like), image scaling etc. The chosen print media type is also an example of an image processing attribute, as it may influence the array of dots obtained upon rasterizing the image data. Depending on the absorption properties of the print media, more or less dots of ink have to be used to produce a satisfying appearance of the printed image. A type of print media may be 'glossy paper', another type may be 'plain paper' and yet another type may be 'special photo paper'. The image processing unit 54 is thus suited for taking into account image processing attributes in the rasterizing stage, this in order to produce a raster image in accordance with said attributes.

Print settings are parameters which are assigned to a print job and which do not impact the raster image. An example is the assigned output tray for the print media, finishing options (such as paper orientation, the presence or not of a staple, binding option, cutting option, or the like), number of printed sets etc.

When a print job is submitted by a user from any of the workstations 28, 30 or 32, the control unit 52 of the printing apparatus 1 stores the incoming print job in a predetermined area of the hard disk 50. The control unit 52 then executes various tasks in order to execute a print process of the print job according to the image processing attributes and print settings.

The CPU 40 reads out the print job which has been submitted and which is stored on the HD 50, and controls the image processing unit 54 so as to obtain a suited raster image, in accordance with the image processing attributes set by the user. The CPU 40 also controls the print engine 2 so as to obtain a suited print result, in accordance with the raster image and the print settings included in the print job and set by the user.

Once the user has reached the site at which the print engine 2 is located, and sees the first printed swaths on the paper he or she may realise that his or her chosen image processing attributes are wrong. This mostly occurs as a consequence of a mistake. The user may have intended to select other attributes from the client application running on the workstation than he or she actually did, or alternatively, may have been mistaken on the meaning of a shown option from said application. The case may also occur that a user wants to test the effects of various image processing attributes on the printed image, this in order to choose the most appropriate attributes for certain purposes.

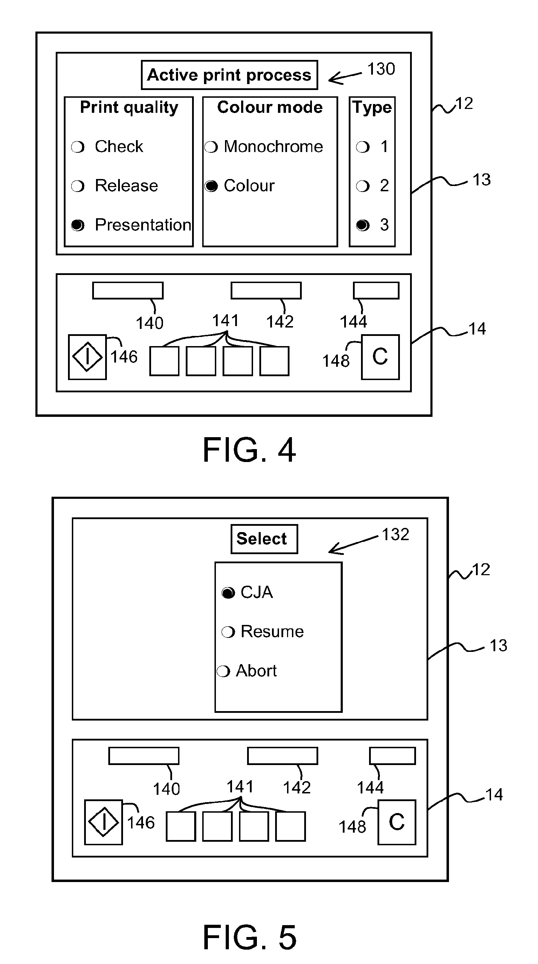

The flowchart shown in Fig. 3 illustrates the steps of the method according to an embodiment of the invention. While the print process is active, the CPU 40 checks based on detection information of the control panel 14 if the user inputs a print cancel instruction via the local user interface 12. Fig. 4 illustrates the local user interface unit 12 with its display unit 13 and its key panel 14. On the display unit 13, an operation window 130 is displayed in which a number of image processing attributes of the print job being printed are shown. In the example of Fig. 4 , the selected print quality is of the type 'Presentation', the colour mode is 'Colour' and the selected type of print media has the code 3. Although only a limited number of image processing attributes are illustrated in Fig. 4, in practice, other image processing attributes may be displayed, such as discussed above. The control panel 14 includes mechanical hardware keys such as a ten-key pad 141, a start key 146, selection keys 140, 142, 144 used to input user's instructions and a cancel key 148.

The user, having realised that his or her selected image processing attributes are wrong while swaths of an image were printed, presses the cancel key 148 on the control panel 14 of the local user interface 12. Consequently, the local user interface unit 12 transmits the cancel instruction to the control unit 52. In step S2 (see Fig. 3), the control unit 52 receives the cancel instruction. The control unit 52 then issues a command to cancel the active print process to the print engine 2. Consequently, in step S4, the active print process is stopped, meaning that the printhead which is mounted on a carriage of the print engine 2 stops printing swaths of images.

As a consequence of step S2, the control unit issues commands to the local user interface unit 12 for enabling the user to enter a so-called CJA (Change Job Attributes) mode in which image processing attributes of the print job can be modified. As shown in Fig. 5, the local user interface unit prompts an operation selection window 132 on the display unit 13. The user is enabled to choose between different alternatives: 'Resume' for resuming the former active print job, in the case the cancel button 148 had been inadvertently pressed, 'CJA' for modifying the image processing attributes of the print job and 'Abort' for erasing permanently the print job. Upon pressing the selection key 142 and a confirmation key from the pad 141, the user can input the selected option.

In the present example, the user uses the selection key 142 and a confirmation key in order to input the selection of the CJA option for modifying the image processing attributes of the print job.

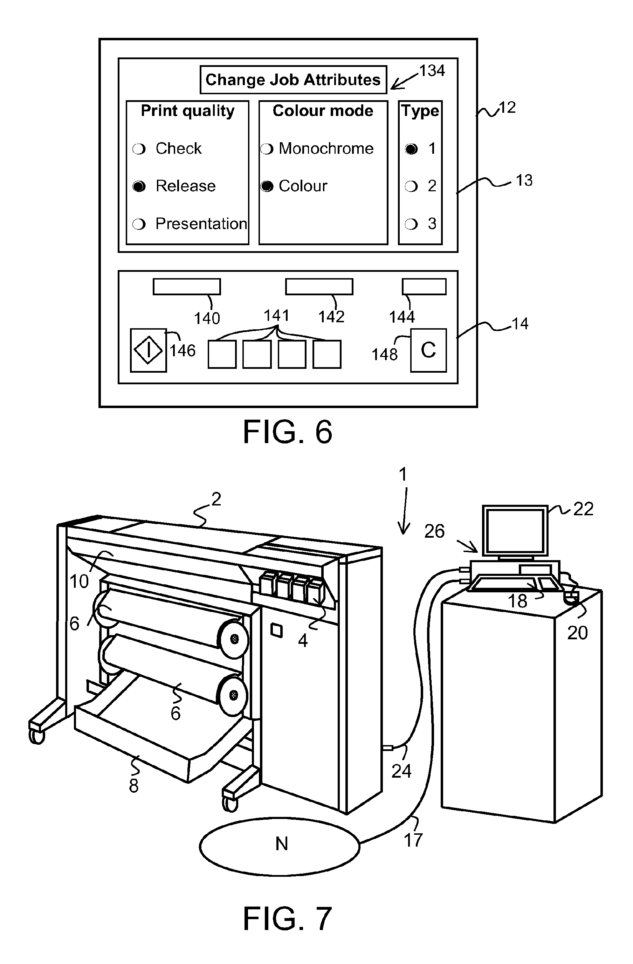

Subsequently, the local user interface unit 12 prompts a CJA (Change Job Attributes) operation window 134 on the display unit 13, as is shown in Fig. 6. The selection menu 134 enables the modification of the image processing attributes of the print job. On the key panel 14, the selection key 140 now enables the user to input a modification of the print quality, the key 142 enables the user to input a modification of the colour mode, while the key 144 enables the user to input a modification of the type of print media (coded 1, 2 or 3). This modifications are inputted by the user as illustrated in Fig. 6 by way of example. The modified image processing attributes concern the print quality (modified to a 'Release' print mode) and type of print media (modified to the type having the code 1).

The local user interface 12 then transmits the modified image processing attributes to the control unit 52. In step S6, the control unit receives the modified image processing attributes. The CPU 40 then issues a command to the image processing unit 54 for converting the print job with the modified image processing attributes into a raster image. It is needed to convert the print job again, since the raster image is to be modified due the user's instructions to modify a number of image processing attributes. The submitted print job had been previously stored in a predetermined area of the hard disk 50. Therefore the image processing unit 54 is able to convert the print job with the modified image processing attributes since the image data to be printed is still available on memory means of the control unit 52.

Consequently, image processing unit 54 executes in step S8 a conversion of the print job with the modified image processing attributes. A modified raster image is thus obtained. In step S10, a print process of the print job according to the modified image processing attributes is activated.

A command to activate a print process of the print job with the modified image processing attributes can be issued automatically by the CPU 40 upon completion of converting the print job with the modified image processing attributes into a raster image.

Alternatively, a command to activate a print process of the print job with the modified image processing attributes can be issued by the CPU upon receiving a re-start instruction via the local user interface unit. In such case, the user inputs the re-start instruction by pressing the adequate keys from the control panel 14.

Then, a new print process becomes active, meaning that the printhead which is mounted on a carriage of the print engine 2 starts printing swaths of images according to the print job with modified image processing attributes.

Fig. 7 shows a printing apparatus according to another embodiment of the invention. The printing apparatus 1 comprises a print engine 2 and a print server 26 located in the immediate surrounding area of the print engine 2. The print engine 2 is connected to the print server 26 through a connection cable 24 adapted for exchanging data. The print server 26 is further connected to a network N, the connection being diagrammatically shown in the form of a cable 17. The print server 26 is suited for receiving print jobs submitted through the network N from a remote workstation (not shown here). The print server 26 ensures that the submitted print jobs with image processing attributes and print settings are printed accordingly by the print engine 2 on print media. For performing its tasks, the print server 26 is provided with a controller comprising the same components as the control unit 52 shown in Fig. 2. The print server's controller comprises a Central Processing Unit (CPU) 40, a Random Access Memory (RAM) 48, a Read Only Memory (ROM) 60, a network card 46, a hard disk (HD) 50, a bus system 42 and an image processing unit 54. The print server 26 comprises further a local user interface unit consisting of input means and display means functionally connected thereto. Input means may comprise a keyboard 18 and a mouse 20 that enable a user input instructions and display means comprise a monitor 22. The print server 26 may be provided with a print queue manager for managing the submitted print jobs. The print server's controller is adapted to convert a print job having image processing attributes into a raster image, and to cancel an active print process of a print job having image processing attributes upon receipt of a cancel instruction inputted via the local user interface unit 18, 20, 22.

According to an embodiment of the invention, the print server's controller is adapted to receive modified image processing attributes inputted via the local user interface 18, 20, 22 and to convert the print job with the modified image processing attributes into a raster image, when an active print job has been cancelled via the local user interface unit 18, 20, 22.

## Claims

1. Method for executing a print process on a printing apparatus provided with a print engine, a local user interface unit and a control unit, comprising the steps of receiving a cancel instruction via the local user interface unit (S2) and cancelling an active print process (S4) of a print job executed according to image processing attributes, **characterised in that** the method further comprises the steps of receiving an instruction via the local user interface unit modifying the image processing attributes of the print job (S6), converting the print job according the modified image processing attributes into a raster image (S8) and activating a print process of the print job according to the modified image processing attributes (S10).

2. Method for executing a print process on a printing apparatus according to claim 1, the step of activating the print process of the print job with the modified image processing attributes (S10) being executed automatically upon completion of the step of converting the print job with the modified image processing attributes into a raster image (S8).

3. Method for executing a print process on a printing apparatus according to claim 1, the step of activating the print process of the print job with the modified image processing attributes (S10) being executed upon receiving a re-start instruction via the local user interface unit.

4. Printing apparatus comprising a print engine (2), a local user interface unit (12) and a control unit (52) for controlling a print process, said control unit (52) being adapted to convert a print job having image processing attributes into a raster image, the control unit (52) being further adapted to cancel an active print process of the print job having image processing attributes upon receipt of a cancel instruction inputted via the local user interface unit (12), **characterised in that** the control unit (52) is further adapted to receive modified image processing attributes inputted via the local user interface (12) and to convert the print job with the modified image processing attributes into a raster image, when the active print job has been cancelled via the local user interface unit (12).

5. Printing apparatus as claimed in claim 4, the local user interface (12) being integrated to the print engine (2).

6. Printing apparatus as claimed in claim 4 or 5, the control unit comprising an image processing unit (54) for converting a print job having image processing attributes into a raster image.

7. Printing apparatus as claimed in claim 4, 5 or 6, the control unit (52) being integrated to the print engine.

8. Printing apparatus as claimed in claim 4, comprising a print server (26) including the control unit and the local user interface, said print server (26) being located in the immediate surrounding area of the print engine (2).

9. Computer program product residing on a computer readable medium comprising instructions for causing at least one process unit to perform the method of any of the claims 1 to 3.
